# EUROPEAN PATENT SPECIFICATION

(11) **EP 3 097 267 B1**
(45) Date of publication and mention of the grant of the patent: **18.11.2020**
(21) Application number: 14815305.9
(22) Date of filing: 12.12.2014
(51) Int. Cl.: F01D 5/14, F01D 5/18, F01D 5/28

(54) **ROTOR BLADE OR GUIDE VANE ASSEMBLY**
ROTORBLATT- ODER LEITSCHAUFELANORDNUNG
ENSEMBLE PALE DE ROTOR OU AUBE DE GUIDAGE

(30) Priority: 20.12.2013 EP 13199004
(43) Date of publication of application: 30.11.2016
(73) Proprietor: Ansaldo Energia IP UK Limited, London W1G 9DQ (GB)
(72) Inventor: OPDERBECKE, Thomas, CH-5417 Untersiggenthal (CH); HOEVEL, Simone, CH-5426 Lengnau (CH); FERBER, Joergen, 79793 Wutöschingen (DE)
(74) Representative: Bernotti, Andrea
(86) International application number: PCT/EP2014/077627
(87) International publication number: WO 2015/091289

(56) References cited:
- EP-A2- 1 106 783
- WO-A2-2011/019412
- US-A- 2 648 520
- US-A- 4 786 234
- US-A1- 2006 120 869
- US-A1- 2008 159 856
- US-A1- 2011 110 790
- US-B1- 8 366 398

## Description

### Technical Field

The present invention relates to a rotor blade or guide vane assembly of a turbomachine, especially of a gas turbine engine. In particular, the invention relates to a modularly designed blade or vane of a turbomachine with one or more interchangeable elements or modules. In addition, the invention is applicable for other turbomachine parts, like heat shields, inner platform, outer platform, airfoil carrier, etc.

Additionally, the invention relates to manufacturing, reconditioning, joining and disassembling methods with respect to turbomachine components.

### Background of the Invention

EP 2 204 537 A2 discloses a guide vane for a gas turbine. This vane consists of a composite airfoil structure. The composite airfoil structure may have an opening. The vane may include a spar. The spar may have a body, which may be disposed within the opening. A standoff structure may be disposed within the opening. In some nonlimiting embodiments, a cooling air gap may be defined between the body and an internal surface of the composite airfoil structure.

US 8,235,670 B2 shows a ceramic matrix composite (CMC) airfoil, assembled from a pressure side wall and a suction side wall, joined by interlocking joints at the leading edge and trailing edge of the airfoil to form a tapered thin trailing edge. The trailing edge is thinner than a combined thickness of the airfoil walls. One or both of the interlocking joints may be formed to allow only a single direction of assembly, as exemplified by a dovetail joint. Each joint includes keys on one side and respective keyways on the other side. Each keyway may have a ramp that eliminates indents in the airfoil outer surface that would otherwise result from the joint.

According to US 2011/0142684 A1 a rotor blade airfoil is formed by a first process using a first material. A platform is formed by a second process using a second material that may be different from the first material. The platform is assembled around a shank of the airfoil. One or more pins extend from the platform into holes in the shank. The platform may be formed in two portions and placed around the shank, enclosing it. The two platform portions may be bonded to each other. Alternatively, the platform may be cast around the shank using a metal alloy with better castability than that of the blade or shank, which may be specialized for thermal tolerance. The pins bear load from the under section of the airfoil.

According to US 2011/0142639 A1 a turbine airfoil extends from a shank. A platform brackets or surrounds a first portion of the shank Opposed teeth extend laterally from the platform to engage into respective slots in a disk. Opposed teeth extend laterally from a second portion of the shank that extends below the platform to engage other slots in the disk. Thus the platform and the shank independently support their own centrifugal loads via their respective teeth. The platform may be formed in two portions that are bonded to each other at matching end-walls and/or via pins passing through the shank. Coolant channels may pass through the shank beside the pins.

EP 2 189 626 B1 describes to a rotor blade arrangement, especially for a gas turbine, which rotor blade arrangement can be fastened on a blade carrier and comprises in each case a blade airfoil element and a platform element, wherein the platform elements of a blade row form a continuous inner shroud. With such a blade arrangement, a mechanical decoupling, which extends the service life, is achieved by blade airfoil element and platform element being formed as separate elements and by being able to be fastened in each case separately on the blade carrier.

US 2011/268582 A1 relates to a blade, comprising a blade airfoil which extends in the longitudinal direction of the blade along a longitudinal axis. The blade airfoil, which is delimited by a leading edge and a trailing edge in the flow direction, merges into a shank at the lower end beneath a platform which forms the inner wall of the hot gas passage, and ends in a customary blade root portion with a fir-tree-shaped cross-sectional profile by which the blade can be fastened on a blade carrier, especially on a rotor disk, by inserting into a corresponding axial slot (see, for example, Fig. 1 of US 4,940,388).

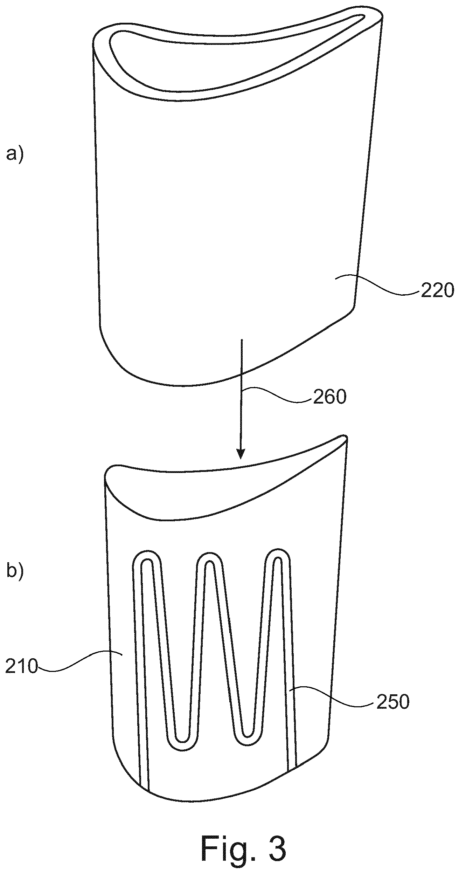

Cooling passages extend inside the blade airfoil for cooling the blade with a cooling medium, particularly cooling air, via a feed hole which is arranged on the shank. The shank, similar to the blade airfoil, has a concave and a convex side. The feed hole, which extends obliquely upwards into the interior of the blade airfoil, opens into the outside space on the convex side of the shank. As shown in Fig. 3, the stiffening element is formed as a large-area plateau, and from the opening of the feed hole arranged to the left of the center plane reaches far beyond the center plane of the blade so that the stiffening element is formed symmetrically to the center plane and also encompasses the mouth of the feed hole.

In US 2013/0089431 A1 a blade airfoil for a turbine system is disclosed. The blade airfoil includes a first body having exterior surfaces defining a first portion of an aerodynamic contour of the blade airfoil and formed from a first material. The blade airfoil further includes a second body having exterior surfaces defining a second portion of an aerodynamic contour of the blade airfoil, the second body is coupled to the first body and formed from a second material having a different temperature stability than the first material. In another embodiment, a nozzle for a turbine section of a turbine system is disclosed. The nozzle includes a blade airfoil having exterior surfaces defining an aerodynamic contour, the aerodynamic contour comprising a pressure side and a suction side extending between a leading edge and a trailing edge. The blade airfoil includes a first body having exterior surfaces defining a first portion of the aerodynamic contour of the blade airfoil and formed from a first material. The blade airfoil further includes a second body having exterior surfaces defining a second portion of the aerodynamic contour of the blade airfoil, the second body is coupled to the first body and formed from a second material having a different temperature stability than the first material.

US 5,700,131 shows an internally cooled turbine blade for a gas turbine engine that is modified at the leading and trailing edges to include a dynamic cooling air radial passageway with an inlet at the root portion and a discharge at the tip feeding a plurality of radially spaced film cooling holes in the blade airfoil surface. Replenishment holes communicating with the serpentine passages radially spaced in the inner wall of the radial passage replenish the cooling air lost to the film cooling holes. The discharge orifice is sized to match the backflow margin to achieve a constant film-hole coverage throughout the radial length. Trip strips may be employed to augment the pressure drop distribution. Also well known is that the engine's efficiency increases as the pressure ratio of the turbine increases and the weight of the turbine decreases. Increasing the speed of the turbine also increases the blade airfoil loading and, of course, satisfactory operation of the turbine is to stay within given blade airfoil loadings. The blade airfoil loadings are governed by the cross sectional area of the turbine multiplied by the velocity of the tip of the turbine squared. Obviously, the rotational speed of the turbine has a significant impact on the loadings. The spar/shell construction contemplated by this invention affords the turbine engine designer the option of reducing the amount of cooling air that is required in any given engine design. And in addition, allowing the designer to fabricate the shell from exotic high temperature materials that heretofore could not be cast or forged to define the surface profile of the blade airfoil section. In other words, by virtue of this invention, the shell can be made from Niobium or Molybdenum or their alloys. In addition, because of the efficacious cooling scheme of this invention, the shell portion could be made from ceramics or more conventional materials and still present an advantage, because a lesser amount of cooling air would be required.

EP 2 642 076 shows a connecting system for metal components and CMC components, a turbine blade retaining system and rotating component retaining system are provided. The connecting system includes a retaining pin, a metal foam bushing, a first aperture disposed in the metal component, and a second aperture disposed in the ceramic matrix composite component. The first aperture and the second aperture are configured to form a through-hole when the metal component and the ceramic matrix composite component are engaged. The retaining pin and the metal foam bushing are operably arranged within the through-hole to connect the metal component and the ceramic matrix composite component.

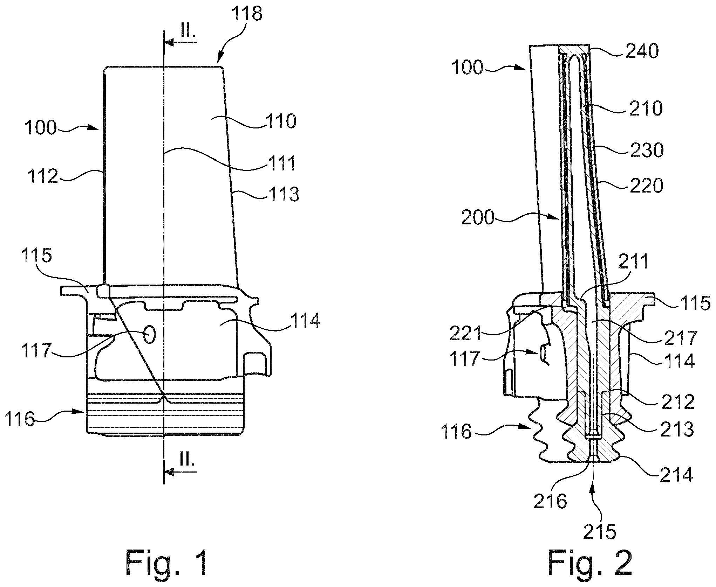

US 8,366,398 B1 shows a turbine blade or vane for a gas turbine engine, especially for a large frame industrial gas turbine engine, including a shell secured to a spar through a number of hooks that extend from both the shell and the spar. Figure 1 shows a cross-sectional view of a cut-away section of the assembled blade or vane. The blade or vane includes a shell 11 having an airfoil shape with a leading edge and a trailing edge with a pressure side wall and a suction side wall extending between the two edges to form the airfoil for the blade or vane. The shell 11 is made from a high temperature resistant material (higher than the nickel super alloys currently used) such as tungsten (for vanes), molybdenum or columbium (for both blades and vanes) in order to allow use at higher turbine inlet temperatures. These high temperature resistant materials are also referred to as refractory materials. To form a thin wall shell from one of these materials, a wire EDM (electric discharge machining) process is used to cut the shell from a block of this material. The shell 11 and the spar 12 both have a number of hooks 13 that extend in a span-wise (radial) direction of the airfoil. The hooks 13 from the shell engage with the hooks 13 from the spar to secure the shell to the spar. The spar 12 and the spar hooks 13 can be made from conventional materials such as the nickel super alloys using the investment casting process and standard metal machining processes if needed. The shell 11 and the shell hooks 13 are formed as a single piece and cut, using the wire EDM process because of the material used. The hooks 13 from the shell 11 and the spar 12 are all formed with a slanted contact surface 14 as seen in Figure 2 and extend substantially parallel to the airfoil surface. The slanted contact surfaces 14 are slanted such that the contact force increases as the opposed hooks move away from one another. The slanted contact surfaces 14 allow for shifting of the shell with respect to the spar while maintaining a tight fit between them and also to keep a tight seal since cooling air will be passed along the spaces formed between adjacent hooks 13. The slanted contact surfaces 14 also allow for twisting of the shell 11 with respect to the spar 12 while maintaining a tight fit. Also, the hooks 14 allow for the shell to bulge out from the spar due to high cooling air pressures within the space between adjacent hooks while maintaining the tight fit between the shell 11 and the spar 12. In the Figure 1 embodiment, all of the hooks on the spar 12 extend toward the trailing edge. In another embodiment, the hooks in the forward region can extend toward the leading edge while the hooks in the aft region can extend toward the trailing edge. In another embodiment, one of the hooks on the pressure side and the suction side can be facing the opposite direction than the remaining hooks on both sides (P/S and S/S) walls of the spar. A similar arrangement of hooks on the shell would be required for proper alignment of hooks from the spar.

Other examples of known blades or vanes are disclosed in WO 2011/019412 A2, in US 2006/120889 A1, in US 4 786 234 A, in US 2008/159856 A1 and in EP 1 106 783 A2.

### Summary of the Invention

The technical problem solved by the present invention relates to joining an outer shell to an inner core structure of an airfoil of a rotor blade or a guide vane of a turbomachine, especially a gas turbine. In addition, the present invention solves the problem of assembling or disassembling such a rotor blade or guide vane.

According to the present invention, a modular rotor blade or guide vane is provided, as defined in claim 1.

The inner core structure of the blade or vane includes the following basic features:
- Inner core structure comprises at least one spar.
- Inner core structure is made of a metal body with mechanical properties to carry the main load.
- Inner core structure can be made either of the same material as the outer shell or can be made of a different material.
- Inner core structure is made of one or more parts.
- Inner core structure can be tailored to requirements.
- Inner core structure can be made of ceramic, preferably CMC, MMC.
- Inner core structure can be made of a composite. Inner core structure can be manufactured by casting, machining, forging, powder metallurgical processes.

The outer shell and, if used, an intermediate shell include the following basic features:
- Shell can be made of a metal body with focus on oxidation and corrosion resistance and fatigue strength at high temperature. Shell can be made by SLM, casting, machining, forging, powder metallurgical processes.
- Shell can be pre-fabricated as finished part or as a wrapping.
- Shell can be tailored by combining materials with differing properties or thickness.
- Shell can consist of multiple layers.
- Shell can be made as a circumferential structure to an inner core.
- Shell can be planar.
- Shell can have a specific functional surface structure (inner and/or outer side) to enhance joining, aerodynamics, cooling aspects, coating adherence.
- Shell can be integrally or partially cooled.
- Shell can provide a sealing function.
- Shell can be coated (e.g. TBC).
- Shell can provide a new aerodynamic profile.

Joining, manufacturing, reconditioning, disassembling processes include the following basic features:
- The outer shell may be shrunk to the inner core structure of the airfoil by using a magnetic pulse welding, crimping, explosion forming or hydro forming.
- The joining process can be assisted by thermal shrinkage in both directions.
- The joining process can be supported by selection of materials with different thermal expansion between inner core structure and outer shell; a lower thermal expansion of the outer shell induces a forced fit of the shell to the inner core structure at higher temperatures.
- A brazing process can take advantage of shrinking process with intermediate layer of braze-airfoil.
- Joining components or modules can be mechanically secured each other.
- The assembled component can be disassembled by destroying the outer shell with minor impact on refurbishment of the inner core structure; the inner core structure can be re-used. for this reason the outer shell is equipped with defined breaking points to make disassembly easier.

The invention uses e.g. a TBC (thermal barrier coating) layer applied on the metallic surface of the heat exposed component and suggests to join at least one plate-like heat resistant component made of ceramic material onto said TBC-layer which provides a continuous surface of ceramic material to obtain a heat resistant cover on the TBC to reduce the temperature stress of TBC during heat exposure of the heat exposed component. So, the TBC acts as layer or inter-layer between the metallic surface of the heat exposed component and with respect to at least one plate-like heat resistant component.

A directly provided joining in way of brazing of highly porous ceramic plate-like heat resistant component onto metallic substrates could only be achieved in a very limited porosity range of the ceramic material which is characterized by the range between 10 vol% and 90 vol% by using very high brazing temperature over 850°C.

Successful joining by way of brazing of ceramic materials with other porosity ranges onto metal substrates requires a different brazing strategy. According to the invention it is proposed to use a layer of thermal barrier coating (TBC-layer) which has two functions: Firstly, to reduce the thermal mismatch stress to be taken by the ceramic and thereby allow brazing of ceramics with a broader porosity range from 1 to 90 vol%, and, secondly, to add a residual life-time to the heat exposed component in case of a loss of the ceramic plate-like heat resistant component.

The joining of the ceramic plate-like thermally resistant components onto the continuous surface of the layer of thermal barrier coating (TBC-layer) can be performed by brazing, using a reactive air braze or an active braze alloy. It is also possible that the plate-like thermally resistant component is joined on said TBC-layer by a diffusion braze, whereby at least one of the surface of the ceramic material of said TBC-layer or the plate-like thermally resistant component is metallized.

Accordingly, the disclosure relates to a method, not part of the invention, of applying or reconditioning metallic surface of thermally exposed components of a cast, machined, forged rotor blade or guide vane of a gas turbine respectively turbomachine, particularly with regard to a flow applied outer shell, airfoil substructure or spar, anchoring members with respect to rotor or stator and additional structured components. The applying or reconditioning process is directed to reduce the temperature stress on the metallic surface and is created by attaching a ceramic insert and/or fulfilled by fitting a coating treatment.

The metallic surface according to such a TBC-layer is directly or indirectly applied, and providing a continuous surface of ceramic material, wherein at least one plate-like thermally resistant component made of ceramic material is joined onto said continuous surface of ceramic material to obtain a thermally resistant cover onto such layer for reducing its temperature stress during the exposure of the thermally exposed component.

The plate-like thermally resistant component is joined on the TBC-layer by a braze, which consists of a reactive air braze or active braze alloy; or the plate-like thermally resistant component is joined on such layer by a diffusion braze and at least one surface of the ceramic material of said layer or the plate-like thermally resistant component is metallized; or the plate-like thermally resistant component is joined on such layer by a cement type adhesive.

Moreover, a multitude of single plate-like thermally resistant components is joined onto the surface of the TBC-layer of such that the plate-like thermally resistant components are arranged side by side covering at least a part of the surface of the layer of thermal barrier coating.

Generally, the plate-like thermally resistant component provides a surface opposed to the layer of thermal barrier coating having a shape of aerodynamic function.

According to an advantageous method for fixing a thermally resistant component, like a ceramic tile, on a surface of a thermally exposed component, for example with respect to the outer shell, by means of brazing of at least a part of a surface of the ceramic tile limited by a peripheral boundary edge on the surface of the thermally exposed component using a molten solder is characterized by metallizing the surface of the ceramic tile at least with the exception of an edge area comprising the peripheral boundary edge of the ceramic tile. After metallizing step the metallized surface of the ceramic tile is brazed to the surface of the thermally exposed component in which the peripheral boundary edge of the ceramic tile remains excluded from the braze joint respectively solder joint.

Additionally, it is proposed to work with a braze-metal alloy as solder material which does not wet the ceramic surface of the thermally resistant component unless such surface has undergone metallization before. Thus, the braze area respectively solder area, which corresponds to the joint area, can be defined in shape and size by the metallization process during which a metal layer is coated onto a defined area of the surface of the ceramic tile.

A further alternative for joining the plate-like thermally resistant component onto the continuous surface of the TBC-layer can be realized by a cement type adhesive braze-material.

A single airfoil of a rotor blade or guide vane of turbomachine, e.g. a gas turbine, may be covered completely with a TBC-layer. Additionally, a thermally resistant component made of ceramic material may be attached in the area of the leading edge of the airfoil. Between the ceramic thermally resistant component and the TBC-layer of the airfoil a joint layer which preferably consists of a metallic braze layer, a reactive air braze or an active braze alloy is applied.

The outer shell can be applied to the airfoil inner core structure (spar) in circumferential assembly. The outer shell represents the aero-dynamical profile of the airfoil configuration and is an interchangeable module with variants in cooling and/or provided materials and/or compounding in line with the different operating regimes of the turbomachine.

One of the most important aspects of the invention provides at least one outer shell and, according to operative requirements, at least one intermediate shell for modular variants of the original rotor blade or guide vane airfoil. Function of the blade airfoil core structure is to carry mechanical load from the blade airfoil module. In order to protect the airfoil core structure against high temperature and thermal deformation, an outer and an intermediate shell is introduced.

It is required as compensator for different thermal expansion of outer shell and inner core structure (spar). The outer shell is joined to the intermediate shell or to the spar generally by interference fit and the intermediate shell is also joined to the spar by interference fit.

The mentioned spar as the inner core structure includes a tip cap and includes a cooling configuration for cooling the spar itself and optionally for providing the intermediate shell with cooling media.

In the event of a damage to the flow-charged outer shell, repair involves the replacement of only the damaged blade or vane component instead of a replacement of the entire blade or vane. The modular design facilitates the use of various materials referring to the shell, including materials that are dissimilar. Thus, suitable materials can be selected within the shell components to optimize component life, cooling air usage, aerodynamic performance and costs.

The outer shell, charged by the hot gas flow, can further include a seal provided between a recess and at least one of the radial endings of the outer shell and the outer peripheral surface of the blade airfoil at the radial end. As a result, hot gas infiltration or cooling air leakage can be excluded, if the outer shell segments are brazed or welded along their radial interface at or nearby the outer peripheral surface so as to close the gaps. Alternatively, the gaps can be filled with a compliant insert or other seal (rope seal, tongue and groove seal, sliding dove-tail, etc.) to prevent hot gas ingress and migration through the gaps. In all cases, the interchangeability of the single shell or shell components can be maintained.

The gap or groove of the radial interface of the single shell components can be filled with a ceramic rope and/or a cement mixture. An alternative consists in a shrinking process with respect to the shell or shell components on the spar or airfoil core structure.

Referring to the joining process, the shrinking process between the outer shell and inner core structure can be stiffened by local deep welding steps in circumferential direction or by brazing etc. In order to provide a certain elasticity to the joining elements during the shrinking process, the outer shell is divided into two or more parts in the radial direction along the leading edge and trailing edge; thus, pressure side and suction side walls forming separate elements. Along the radial separation plane of the outer shell locking elements are provided.

Additionally, the thickness of the outer shell is inwardly tailored in order to achieve optimal flexibility during the shrinking process. Furthermore, the outer shell can be tailored by different material properties or thickness according to individual conditions of use.

In connection with the inwardly tailored surface of the outer shell, it can be disposed that the external surface of the spar or airfoil sub-structure includes a plurality of grooves or protrusions that are in alignment to each other. Grooves and protrusions form an integral force-locked connection with respect to the inward surface of the outer shell.

At a discontinuity on the surface of the divided outer shell due to an overlap of the assembled parts in the area of leading edge and trailing edge, surface continuity flaps may be provided between the leading edge fastening means on the pressure side part. Likewise, surface continuity flaps may be provided between the trailing edge fastening means on the pressure side part. Ceramic filler may be applied between the continuity flaps to provide an aerodynamically smooth surface over the outer shell. Alternatively, ceramic or CMC filler alone may fill and smooth the indents caused by the fastening means.

The outer shell can be equipped with defined breaking points to make easier the disassembly process.

The assembling of the individual elements or modules is supported by force closure means (force-fit, form-fit arrangement) with a detachable or permanent fixation. Additionally, one or more mechanical fixing means may be inserted into the connection area, wherein the mechanical fixing means are separate parts and they are cast into the connection area with a force-fit or form-fit arrangement.

Different types of seal between airfoil and platform are possible:
1. A "rope seal" as is described for example in US 7,347,424 B2. In this case, there are leakage losses, however.
2. A "brush seal" Also in this case, leakage losses have to be taken into consideration.
3. A temperature-resistant filing material for ensuring a 100%-sealing without leakage losses with simultaneous avoidance of force transmission, for example by means of superplastic material.

According to individual operating conditions of the turbomachine outer shell and core structure may comprise additional means and/or inserts, which are able to resist thermal and chemical stresses, wherein the mentioned means and inserts are in whole or in part interchangeable.

Additionally, a thermally insulating material or a thermal barrier coating (TBC) generally can be applied to various portions of the rotor blade or guide vane assembly.

The main advantages and features of the present invention are as follows:
Thermo-mechanically decoupling of individual parts, especially of outer and, if existing, intermediate shell, and core structure improve the lifetime of the blade or vane compared to an integral design.

Modules with different variants in cooling and/or material configuration can be selected to best fit to the different operating regimes of the gas turbine.

It is possible to introduce an inner core structure (spar) with an extension from the root portion of the blade or vane to its tip.

Furthermore, it is possible to introduce an inner spar comprising an extension from the root portion of the blade or vane to its tip, whereby in the region of the shank the spar has a special contour in concordance with the contour of the opposite form fit elements.

The core structure of the blade or vane shank consists, in radial direction of the airfoil, of an elongated and relatively slim formed portion. The elongated portion extends over the entire height of the footboard mounting part, wherein the foot-side end of the elongated portion having, both sides of the axial expanse of the elongated portion, shapes of teeth, and the bottom of the elongated portion of the shank under-structure may be formed as the final part of the fir-tree-shaped cross-sectional profile. The teeth of the elongated portion of the shank sub-structure may align with the recesses of two-piece footboard mounting elements to provide room for the teeth of the elongated portion. Footboard mounting elements having opposite cracks or clutches correspond in axially direction to the extending contour of the elongated portion of the shank under-structure for the reciprocal axial coupling.

The blade or vane airfoil comprises a multi-part outer shell, selected in a manner to optimize component life, cooling usage, aerodynamic performance, and to increase the capabilities of resistance against high temperature stresses and thermal deformation.

Especially, the outer shell can additionally be provided with a selected thermally insulating material or a thermal barrier coating, but this measure is not limited to the outer shell.

The spar or core structure has various passage-ways to supply a cooling medium through the blade or vane.

The rotor blade or guide vane according to the invention is based on convective cooling with selected areas of impingement and/or effusion cooling.

As a matter of principle, the interchangeability of all elements and modules of the blade or vane is assured; repairing and/or reconditioning of all parts with equivalent or, if available, better replacement parts are ensured.

The connection of various elements/modules to one another can be made by friction-locked means, optionally in combination with adherence or the use of a metallic and/or ceramic surface coating, or by a force closure with bolts or rivets, or by HT brazing, active brazing, soldering, shrinking.

In particular, the assembling between outer shell and core structure is effected by means of a shrinking joint.

The platform of the rotor blade or guide vane may be composed of at least two individual parts, which are on the one hand actively connected to the airfoil and on the other hand to the outer shell or shell elements.

A modular design of the rotor blade or guide vane spar or airfoil sub-structure facilitates the use of various shell's materials, including materials that are dissimilar, in accordance with the different operating regimes of the gas turbine.

The modular assembling of the rotor blade or guide vane consists of replaceable and non-replaceable elements, and besides the modular assembling of the rotor blade or guide vane comprising substitutable and non-substitutable elements.

The foregoing and other features of the present invention will become more apparent from the following description and accompanying figures.

### Brief Description of the Figures

The invention shall subsequently be explained in more detail exemplary embodiments in conjunction with the drawing. In the drawing:
- Fig. 1: shows an axially assembly of a rotor blade;
- Fig. 2: shows a cross section according to Fig. 1;
- Fig. 3 a, b: shows an assembling solution between an outer shell (Fig. 3a) and a spar (Fig. 3b);
- Fig. 4 a, b: shows an assembling solution between an outer shell (Fig. 4a) and a spar (Fig. 4b), wherein the outer shell consists of two or more pieces;
- Fig. 5 a, b: shows an assembling solution between an outer shell (Fig. 5a) and a spar, wherein the outer shell involves inwardly a tailored thickness.

### Detailed Description of exemplary Embodiments

In Fig. 1 a rotor blade 100 according to an exemplary embodiment of the invention is reproduced. The rotor blade 100 comprises a blade airfoil 110 which extends in the longitudinal direction of the rotor blade along a longitudinal axis 111. The blade airfoil 110, which is delimited by a leading edge 112 and a trailing edge 113 in the flow direction, merges into a shank 114 at the lower end beneath an inner platform 115 which forms the inner wall of the hot gas passage, the shank ends in a blade root 116 with a so called fir-tree-shaped cross-sectional profile by which the blade 100 can be fastened on a blade carrier, especially on a rotor disk, by inserting into a corresponding axial slot.

The inner platform abuts the platforms of neighbouring blades to define a gas passage inner wall for the turbine. An outer not shown thermal shield at the tip of the blade airfoil 118 cooperates again with its neighbours in the manner shown to define the outer wall of the turbine's gas passage.

Cooling passages, which are not shown, extend inside the blade airfoil 110 for cooling purposes, supplied with a cooling medium, particularly cooling air, via a feed hole 117 which is arranged on the shank 114 at the side (see Fig. 2). The shank 114 has a concave and a convex side. In Fig. 1 the convex side faces in the perspective of the viewer. The feed hole 117, which extends obliquely upwards into the interior of the blade airfoil 110, opens into the outside space on the convex side of the shank 114.

Fig. 2 shows a section taken from sectional lines II-II of Fig. 1. The airfoil comprises an outer shell assembly 220, 230 and an elliptical shaped spar 210, extending longitudinally or in the radial direction from a root portion 116 to a tip 240 with a downwardly extending first portion 211 and a second portion 212 with a projection 213 that is adapted to fit into a complementary gap of an attachment 214 with the same outer contour compared to the fir-tree profile 116.

The shank 114 may be formed with the inner platform 115 or the platform 115 may be formed separately and joined thereto and projects in a circumferential direction to abut against the inner platform in the adjacent rotor blade in the rotor disk (not shown). A seal (not shown) may be mounted between platforms of adjacent rotor blades to minimize or eliminate leakage around the individual rotor blades.

The tip 118 of the rotor blade 100 may be sealed by cap 240 that may be formed integrally with the spar 210, or may be a separate piece that is joined to the top end of the spar 210. The outer shell 220 extends over the surface of the spar 210 between the platform 115 and the tip 240.

The outer shell 220 defines a pressure and suction side, a leading 112 and trailing edge 113 (see Fig. 1). The outer shell 220 is made into various parts divided along the longitudinal axis 111 (see Fig. 1), similar to the spar 210.

As shown in Fig. 2, the cooling air 215 is additionally (see numeral 117) admitted through an inlet 216, the central opening formed at the ingress in the final complementary portion 214 and, subsequently, in the spar 210, and flows in a straight passage or interior cavity 217 in radial or quasi-radial direction.

According to Fig. 2 an intermediate shell 230 may be provided. The intermediate shell 230 may be required as compensator for potentially different thermal expansion of outer shell 220 and spar 210 and/or as cooling shirt for additional protection of the spar. The outer shell 220 is joined to the intermediate shell 230 or generally to the spar 210 by interference fit, wherein the intermediate shell 230 is also joined to the spar by interference fit.

Furthermore, the intermediate shell 230 provides additional protection to the spar 210 in case of damage of the outer shell 220. Basically, the intermediate shell 230 is an interchangeable module with variants in cooling and/or material configurations adapted to the different operating regimes of the gas turbine. If several superimposed shells are provided, they may be built with or without spaces between each other.

Fig. 3 shows the process of an assembling 260 between an outer shell 220 according to Fig. 3a and a spar 210 according to Fig. 3b. The surface of the spar 210 provides various cooling serpentines 230. In addition, the interior of the spar body 210 may be equipped with further cooling passages.

Outer shell according to Fig. 3 represents an indispensable embodiment and reflects the aerodynamic profile of the rotor blade or guide vane airfoil. Outer shell 220 is interchangeable, consumable, pre-fabricated, and is multi-piece, and comprising variants in cooling and/or material configurations adapted to the different operating regimes of the turbine. The outer shell 220 is joined to an intermediate shell (see Fig. 2) or to the spar 210, and for assembling shrinking joints are used.

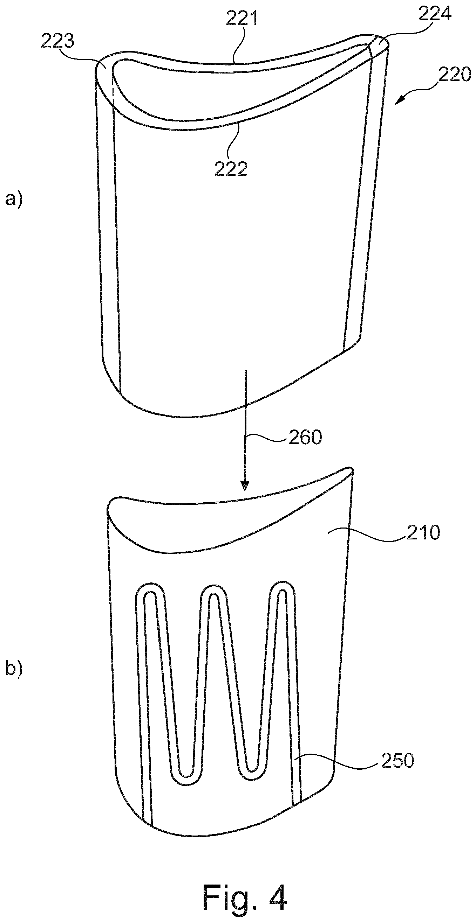

Fig. 4 shows a further embodiment of an assembly between an outer shell 220 according to Fig. 4a and a spar 210 according to Fig. 4b. The surface of the spar 210 provides various cooling serpentines 230. Furthermore, the interior of the spar body 210 is provided, as required, with further cooling passages. Outer shell according to the present Fig. 4 represents an indispensable embodiment and reflects the aerodynamic profile of the rotor blade or guide vane airfoil.

Outer shell 220 is interchangeable, consumable, pre-fabricated, and is multi-piece, and comprising variants in cooling and/or material configurations adapted to the different operating regimes of the gas turbine. Outer shell 220 is joined to an intermediate shell (see Fig. 2) or to the spar 210, and for assembling a shrinking joint or shrink-fit connection may be used. The outer shell 220 according to Fig. 4a consists of two coupled parts 221 (pressure side wall) and 222 (suction side wall). Various fixation keys (not shown) of each part 221, 222, interlock in respective keyways of the adjacent part along the leading edge 223 and trailing edge 224 of the outer shell to form leading edge and trailing edge joints, at least on the basis of a force-locked connection.

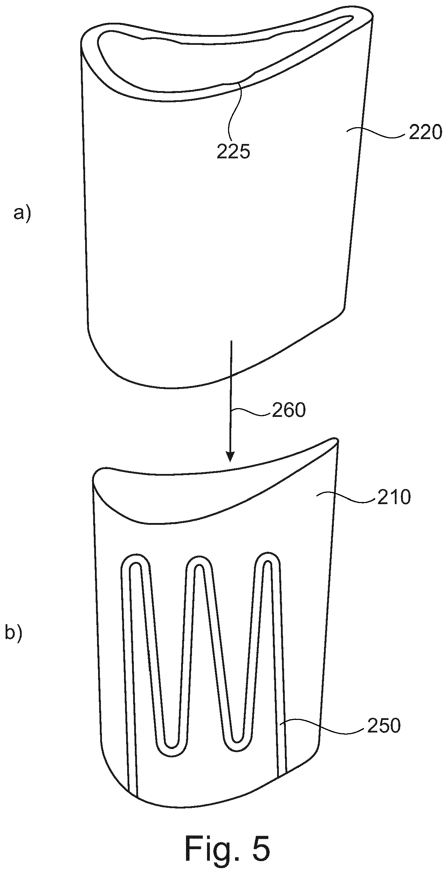

Fig. 5 shows a further embodiment of an assembly between an outer shell 220 according to Fig. 3a and a spar 210 according to Fig. 3b. The surface of the spar 210 provides various cooling serpentines 230. Furthermore, the interior of the spar body 210 is provided with further cooling passages. The outer shell 220 according to Fig. 5a forms the aerodynamic profile of the airfoil. Outer shell 220 is interchangeable, consumable, pre-fabricated, and is multi-piece, and comprising variants in cooling and/or material configurations adapted to the different operating regimes of the gas turbine. The outer shell 220 is joined to an intermediate shell or to the spar 210, and for assembling is used a shrinking joint or shrink-fit connection. Additionally, the thickness of the outer shell 220 is tailored 225 in order to achieve optimal flexibility during the shrinking process. Furthermore, the outer shell 220 can be tailored by different material properties or thickness according to individual operating conditions.

### List of References

- 100: Rotor blade
- 110: Rotor blade airfoil
- 111: Longitudinal axis
- 112: Leading edge of the blade airfoil
- 113: Trailing edge of the blade airfoil
- 114: Shank
- 115: Inner platform
- 116: Blade root, root portion
- 117: Feed hole
- 118: Tip of the blade airfoil
- 200: Embodiments of the rotor blade
- 210: Spar
- 211: Downwardly extending first portion
- 212: Downwardly extending second portion
- 213: Rectangular shaped portion
- 214: Final complementary portion
- 215: Cooling air or cooling medium
- 216: Inlet
- 217: Interior cavity
- 220: Outer shell
- 221: pressure side wall
- 222: suction side wall
- 223: Leading edge
- 224: Trailing edge
- 225: Tailored area
- 230: Intermediate shell
- 240: Tip
- 250: Cooling serpentines
- 260: Assembling

## Claims

1. Modular rotor blade or guide vane, at least comprising an airfoil (110), a platform (115) and a root (116), wherein the airfoil (110) consists of at least an inner core structure (210), being designed for anchoring at least one shell (220, 230), and one or more shells (220, 230), encasing the inner core structure (210) as a whole or in part, one of said shells (220, 230) being an outer shell (220), forming the outer contour of the blade or vane airfoil (110) and being flow-charged in operating mode, wherein the connection between the inner core structure (210) and the flow-charged outer shell (220) is formed by a shrinking joint assisted by thermal shrinkage and materials of the inner core structure (210) and the outer shell (220) are selected such that the outer shell (220) has a lower thermal expansion than the inner core structure (210); **characterized in that** inside of the flow-charged outer shell (220) an intermediate shell (230) is arranged with respect to the core structure (210), wherein both shells (220, 230) are disposed adjacent to each other with or without a distance in between and **in that** the flow-charged outer shell (220) consists of at least two coupled parts according to the pressure and suction side wall of the outer shell (220), wherein fixation keys of each part interlock in respective keyways of the adjacent part along the leading and trailing edges of the outer shell (220) to form leading and trailing edge joints, at least on the basis of a friction-locked connection.

2. Modular rotor blade or guide vane according to claim 1, **characterized in that** at least one shell (220, 230) consists of multiple layers with differing properties for executing different functions in the composite; and/or the surface of the outer shell (220) has a protective coating and is equipped with a thermal barrier coating (TBC).

3. Modular rotor blade or guide vane according to claim 1, **characterized in that** the inner core structure (210) is designed in a one-piece configuration or in a multi-part configuration.

4. Modular rotor blade or guide vane according to claim 1, **characterized in that** the core structure (210) is made from materials with different properties and/or differing geometrical parameters, e.g. wall thickness, in particular for the purpose of tailoring to the requirements in operating mode and/or the inner core structure is made from different materials according to the thermal and mechanical loading in operating mode.

5. Modular rotor blade or guide vane according to claim 1, **characterized in that** the airfoil core structure (210) consists of a metallic material, ceramic, CMC, composite and/or has been made by one or more of the following methods: casting, machining, powder metallurgy, forging; and/or the outer shell (220) consists of a metallic material, ceramic, CMC, MMC, and/or is manufactured by one or more of the following methods: casting, machining, powder metallurgy, forged casting.

6. Modular rotor blade or guide vane according to claim 1, **characterized in that** the shrinking joint of the outer shell (220) to the core structure (210) is stiffened by local welding or brazing, by adhesive means or by mechanical means.

7. Modular rotor blade or guide vane according to claim 1, **characterized in that** the at least one shell (220, 230) is connected to the airfoil core structure (210) by magnetic pulse welding, crimping, explosion forming, hydro forming or a combination of these methods.

8. Modular rotor blade or guide vane according to one of the claims 1 to 7, **characterized in that** the wall thickness of the outer shell (220) is between 0.5 mm and 4 mm, preferably between 1 mm and 2 mm.

9. Modular rotor blade or guide vane according to one of the claims 1 to 8, **characterized in that** the core structure (210) is equipped with passages for a cooling medium for convective cooling or for convective cooling and film and/or effusion and/or impingement cooling of the airfoil (110).

10. Modular rotor blade or guide vane according to one of the claims 1 to 9, **characterized in that** an interior cavity of the core structure (210) is filled with an appropriate insulating material.

11. Modular rotor blade or guide vane according to one of the claims 1 to 10, **characterized in that** the at least one shell (220, 230) is equipped with a tailored wall thickness according to locally predominant loading modes.

12. Modular rotor blade or guide vane according to one of the claims 1 to 11, **characterized in that** the airfoil (110) has a twisted aerodynamic profile in longitudinal direction of the blade or vane and/or the airfoil core structure (210) comprises a spar.

## Patentansprüche

1. Modulare Lauf- oder Leitschaufel, mindestens umfassend ein Schaufelblatt (110), eine Plattform (115) und einen Fuß (116), wobei das Schaufelblatt (110) mindestens aus einer inneren Kernstruktur (210) besteht, die zur Verankerung mindestens einer Hülle (220, 230) bestimmt ist, und aus einer oder mehreren Hüllen (220, 230), welche die innere Kernstruktur (210) ganz oder teilweise umschließen, wobei einer der Hüllen (220, 230) eine Außenhülle (220) ist, welche die Außenkontur des Lauf- oder Leitschaufelblattes (110) bildet und im Betriebsmodus strömungsbelastet ist, wobei die Verbindung zwischen der inneren Kernstruktur (210) und der strömungsbelasteten Außenhülle (220) mittels einer Schrumpfverbindung gebildet wird, die durch thermische Schrumpfung unterstützt wird, und die Werkstoffe der inneren Kernstruktur (210) und der Außenhülle (220) so gewählt werden, dass die Außenhülle (220) eine geringere Wärmeausdehnung als die innere Kernstruktur (210) aufweist; **dadurch gekennzeichnet, dass** die im Inneren der strömungsbelasteten Außenhülle (220) in Bezug auf die Kernstruktur (210) eine Zwischenhülle (230) vorgesehen ist, wobei die beiden Hüllen (220, 230) nebeneinander, mit oder ohne einen Abstand dazwischen angeordnet sind, und dadurch, dass die strömungsbelastete Außenhülle (220) aus mindestens zwei miteinander verbundenen Teilen entsprechend der druck- und saugseitigen Wand der Außenhülle (220) besteht, wobei Befestigungskeile jedes Teils entlang der Vorder- und Hinterkante der Außenhülle (220) in entsprechende Keilnuten des benachbarten Teils greifen, um zumindest auf der Basis einer kraftschlüssigen Verbindung Vorder- und Hinterkantenverbindungen zu bilden.

2. Modulare Lauf- oder Leitschaufel nach Anspruch 1, **dadurch gekennzeichnet, dass** mindestens eine Hülle (220, 230) aus mehreren Schichten mit unterschiedlichen Eigenschaften zur Ausführung verschiedener Funktionen in dem Verbundwerkstoff besteht; und/oder das die Oberfläche der Außenhülle (220) mit einer Schutzschicht und einer Wärmedämmschicht (TBC) versehen ist.

3. Modulare Lauf- oder Leitschaufel nach Anspruch 1, **dadurch gekennzeichnet, dass** die innere Kernstruktur (210) einstückig oder mehrstückig ausgeführt ist.

4. Modulare Lauf- oder Leitschaufel nach Anspruch 1, **dadurch gekennzeichnet, dass** die innere Kernstruktur (210) aus Werkstoffen hergestellt ist, die unterschiedliche Eigenschaften und/oder unterschiedliche geometrische Parameter aufweisen, z.B. Wanddicke, insbesondere zur Anpassung an die Anforderungen im Betriebsmodus, und/oder dass die innere Kernstruktur entsprechend der thermischen und mechanischen Belastung im Betriebsmodus aus unterschiedlichen Werkstoffen besteht.

5. Modulare Lauf- oder Leitschaufel nach Anspruch 1, **dadurch gekennzeichnet, dass** die Kernstruktur (210) des Schaufelblatts aus einem metallischen Werkstoff, Keramik, CMC (Keramik-Matrix-Verbundwerkstoff) oder einem Verbundwerkstoff besteht und/oder nach einem oder mehreren der folgenden Verfahren hergestellt ist: Gießen, maschinelles Bearbeiten, Pulvermetallurgie, Schmieden; und/oder dass die Außenhülle (220) aus einem metallischen Werkstoff, Keramik, CMC, MMC (Metall-Matrix-Verbundwerkstoff) besteht und/oder nach einem oder mehreren der folgenden Verfahren hergestellt ist: Gießen, maschinelles Bearbeiten, Pulvermetallurgie, Schmiedegießen.

6. Modulare Lauf- oder Leitschaufel nach Anspruch 1, **dadurch gekennzeichnet, dass** die Schrumpfverbindung zwischen der Außenhülle (220) und der Kernstruktur (210) durch örtliches Schweißen oder Hartlöten, durch Haftvorrichtungen oder mechanische Vorrichtungen verstärkt ist.

7. Modulare Lauf- oder Leitschaufel nach Anspruch 1, **dadurch gekennzeichnet, dass** die mindestens eine Hülle (220, 230) mittels Magnetimpulsschweißen, -krimpen, Explosionsformen, Hydroformen oder mittels einer Kombination dieser Verfahren mit der Kernstruktur (210) des Schaufelblatts verbunden ist.

8. Modulare Lauf- oder Leitschaufel nach einem der Ansprüche 1 bis 7, **dadurch gekennzeichnet, dass** die Wanddicke der Außenhülle (220) zwischen 0,5 mm und 4 mm, bevorzugt zwischen 1 mm und 2 mm beträgt.

9. Modulare Lauf- oder Leitschaufel nach einem der Ansprüche 1 bis 8, **dadurch gekennzeichnet, dass** die Kernstruktur (210) mit Kanälen für ein Kühlmedium zur Konvektionskühlung oder zur Konvektionskühlung und Film- und/oder Effusions- und/oder Prallkühlung des Schaufelblattes (110) versehen ist.

10. Modulare Lauf- oder Leitschaufel nach einem der Ansprüche 1 bis 9, **dadurch gekennzeichnet, dass** eine innere Kavität der Kernstruktur (210) mit einem geeigneten Isoliermaterial gefüllt ist.

11. Modulare Lauf- oder Leitschaufel nach einem der Ansprüche 1 bis 10, **dadurch gekennzeichnet, dass** die mindestens eine Hülle (220, 230) eine spezielle Wanddicke entsprechend den vorherrschenden örtlichen Belastungsarten aufweist.

12. Modulare Lauf- oder Leitschaufel nach einem der Ansprüche 1 bis 11, **dadurch gekennzeichnet, dass** das Schaufelblatt (110) in der Längsrichtung der Lauf- oder Leitschaufel ein verdrehtes aerodynamisches Profil aufweist und/oder dass die Kernstruktur (210) des Schaufelblatts einen Holm umfasst.

## Revendications

1. Pale de rotor modulaire ou aube de guidage, comprenant au moins une surface portante (110), une plateforme (115) et une emplanture (116), dans laquelle la surface portante (110) se compose au moins d'une structure de noyau interne (210) conçue pour ancrer au moins une coque (220, 230) et une ou plusieurs coques (220, 230), enveloppant la structure de noyau interne (210) en tant que tout ou partie, l'une desdites coques (220, 230) étant une coque externe (220) formant le contour externe de la surface portante de pale ou d'aube (110) et étant chargée en flux en mode opérationnel, dans laquelle le raccordement entre la structure de noyau interne (210) et la coque externe chargée en flux (220) est formé par un joint de rétrécissement assisté par rétrécissement thermique et les matériaux de la structure de noyau interne (210) et de la coque externe (220) sont sélectionnés de sorte que la coque externe (220) a une expansion thermique inférieure à la structure de noyau interne (210) ; **caractérisée en ce qu'**à l'intérieur de la coque externe chargée en flux (220), une coque intermédiaire (230) est agencée par rapport à la structure de noyau (210), dans lequel les deux coques (220, 230) sont disposées de manière adjacente entre elles avec ou sans distance entre elles et **en ce que** la coque externe chargée en flux (220) se compose d'au moins deux parties couplées selon la paroi latérale de pression et d'aspiration de la coque externe (220), dans laquelle des clavettes de fixation dans chaque partie se verrouillent dans des chemins de clavettes respectifs de la partie adjacente le long des bords d'attaque et de fuite de la coque externe (220) pour former les joints de bord d'attaque et de fuite, au moins sur la base d'un raccordement verrouillé par friction.

2. Pale de rotor modulaire ou aube de guidage selon la revendication 1, **caractérisée en ce qu'**au moins une coque (220, 230) se compose de plusieurs couches avec des propriétés différentes pour exécuter différentes fonctions dans le composite ; et/ou la surface de la coque externe (220) a un revêtement de protection et est équipée avec un revêtement de barrière thermique (TBC).

3. Pale de rotor modulaire ou aube de guidage selon la revendication 1, **caractérisée en ce que** la structure de noyau interne (210) est conçue selon une configuration d'un seul tenant ou selon une configuration à plusieurs pièces.

4. Pale de rotor modulaire ou aube de guidage selon la revendication 1, **caractérisée en ce que** la structure de noyau (210) est réalisée à partir de matériaux avec différentes propriétés et/ou différents paramètres géométriques, par exemple l'épaisseur de paroi, en particulier afin de personnaliser les exigences en mode opérationnel et/ou la structure de noyau interne est réalisée à partir de matériaux différents selon le chargement thermique et mécanique en mode opérationnel.

5. Pale de rotor modulaire ou aube de guidage selon la revendication 1, **caractérisée en ce que** la structure de noyau de surface portante (210) se compose d'un matériau métallique, d'une céramique, CMC, d'un composite et/ou a été réalisée à partir d'un ou de plusieurs des procédés suivants : moulage, usinage, métallurgie des poudres, forgeage ; et/ou la coque externe (220) se compose d'un matériau métallique, d'une céramique, CMC, MMC et/ou est fabriquée par un ou plusieurs des procédés suivants : moulage, usinage, métallurgie des poudres, moulage forgé.

6. Pale de rotor modulaire ou aube de guidage selon la revendication 1, **caractérisée en ce que** le joint de rétrécissement de la coque externe (220) sur la structure de noyau (210) est raidie par soudage ou brasage local, par des moyens adhésifs ou des moyens mécaniques.

7. Pale de rotor modulaire ou aube de guidage selon la revendication 1, **caractérisée en ce que** la au moins une coque (220, 230) est raccordée à la structure de noyau de surface portante (210) par soudage par impulsion magnétique, sertissage, formage par explosion, hydroformage ou une combinaison de ces procédés.

8. Pale de rotor modulaire ou aube de guidage selon l'une des revendications 1 à 7, **caractérisée en ce que** l'épaisseur de paroi de la coque externe (220) est comprise entre 0,5 mm et 4 mm, de préférence entre 1 mm et 2 mm.

9. Pale de rotor modulaire ou aube de guidage selon l'une des revendications 1 à 8, **caractérisée en ce que** la structure de noyau (210) est équipée avec des passages pour un milieu de refroidissement pour le refroidissement par convection ou pour le refroidissement par convection et par film et/ou pour le refroidissement par effusion et/ou par empiétement de la surface portante (110).

10. Pale de rotor modulaire ou aube de guidage selon l'une des revendications 1 à 9, **caractérisée en ce qu'**une cavité intérieure de la structure de noyau (210) est remplie avec un matériau isolant approprié.

11. Pale de rotor modulaire ou aube de guidage selon l'une des revendications 1 à 10, **caractérisée en ce que** la au moins une coque (220, 230) est équipée avec une épaisseur de paroi personnalisée selon des modes de chargement localement prédominants.

12. Pale de rotor modulaire ou aube de guidage selon l'une des revendications 1 à 11, **caractérisée en ce que** la surface portante (110) a un profil aérodynamique torsadé dans la direction longitudinale de la pale ou de l'aube et/ou la structure de noyau de surface portante (210) comprend un longeron.
